# EUROPEAN PATENT SPECIFICATION

(11) **EP 3 071 830 B1**
(45) Date of publication and mention of the grant of the patent: **08.08.2018**
(21) Application number: 14864569.0
(22) Date of filing: 08.10.2014
(51) Int. Cl.: F03D 1/06

(54) **WIND TURBINE BLADE WITH WAVE SHAPED TRAILING EDGE**
WINDTURBINENSCHAUFEL MIT WELLENFÖRMIGER HINTERKANTE
PALE DE TURBINE ÉOLIENNE À BORD DE FUITE EN FORME DE VAGUE

(30) Priority: 21.11.2013 DK 201370712
(43) Date of publication of application: 28.09.2016
(73) Proprietor: Envision Energy (Denmark) ApS, 8600 Silkeborg (DK)
(72) Inventor: SØRENSEN, Tommy, 8632 Lemming (DK)
(74) Representative: Tellefsen, Jens J.
(86) International application number: PCT/DK2014/050320
(87) International publication number: WO 2015/074661

(56) References cited:
- EP-A1- 2 270 312
- WO-A2-2010/043645
- DE-A1-102006 043 462
- US-A1- 2010 028 161

## Description

### Field of the Invention

The present invention relates to a wind turbine comprising:
- a wind turbine tower having a top,
- a nacelle coupled to the top of the wind turbine tower,
- a rotor hub rotatably mounted to the nacelle,
- at least one wind turbine blade coupled to the rotor hub, where the wind turbine blade has an aerodynamic profile comprising a first surface defining a pressure side and a second surface defining a suction side connected to each other via a leading edge and a trailing edge, where
- two or more first elements are arranged along at least a part of the trailing edge of the wind turbine blade and at least a second element is arranged between two adjacent first elements, wherein the first and second elements form a continuous profile extending along the trailing edge where each element extends in a chordwise direction towards the leading edge, wherein each first element and each adjacent second element define a section of the continuous profile.

### Background of the Invention

It is well-known that wind turbine blades are reinforced to carry the loads and stresses. This may be done by using a relative rigid element, e.g. a beam or a tube, covered with a laminate or by integrating spar caps into the laminate at the top and bottom which may be further reinforced by placing shear webs between the spar caps. In a partial-pitch wind turbine blade or a pitchable wind turbine blade, the innermost blade section or blade part is often referred to as a blade extender or hub extender. In an attempt to increase the lift and reduce the drag in this section, an aerodynamic profile is often integrated into the mould along the trailing edge. The aerodynamic profile forms a load-carrying structure in which large dynamic loads and stresses are generated due to the incoming wind acting on the blade, particularly in large modern wind turbine blades. This could cause the laminate to buckle or crack due to the edgewise bending of the profile, particularly in the area having the largest chord length.

One solution to this problem is known from Enercon where a number of individual add-ons are mounted to the trailing edge of the wind turbine blade with a spacing of 2 metres. A number of slits are cut into the blade profile at the trailing edge and a triangular shaped projection is laminated to each slit. This configuration forms a relative rigid blade profile between the adjacent projections allowing the strain forces to be concentrated at each projection. This means that the projections experience large strain forces which increase the risk that the projection or the transition area around each projection will fail, e.g. crack or break.

WO 2010/141720 A2 discloses a wind turbine blade with a plurality of large projections facing the pressure side where the height of these projections may vary along the length of the wind turbine blade. These projections form a large rigid profile that is designed to reduce the wake effect generated in the air flow behind the wind turbine. These projections are not designed to reduce the strain forces generated in the aerodynamic profile as the blade bends. The strain forces generated in the wind turbine blade are concentrated at each projection meaning that the laminate of the projection is likely to crack or break, particularly in the transition are around each projection.

WO 2011/029882 A2 discloses a wind turbine blade having a trailing edge flap attached to the blade profile via two deformable panels. The two panels are attached to the shell parts of the blade profile and a C-shaped beam located inside the wind turbine blade using an adhesive. The two panels are further adhered to the trailing edge flap. A cover layer is placed over each panel and adhered to both the respective shell part and the trailing edge flap. This configuration provides a relative complex solution which requires additional manufacturing steps and control components for attaching the flap to the truncated profile and controlling it. This increases the manufacturing time and the production costs. Furthermore, the panels have a corrugated profile where the waves extend in an edgewise direction for allowing the flap to rotate. This adds stiffness to the blade in the edgewise direction and increases the risk of laminate buckling or cracking due to the strain forces as blade bends in an edgewise direction.

EP 1338793 A1 discloses a wind turbine blade having a serrated profile at the trailing edge. The serrations form in-plane profile relative to the trailing edge for reducing the noise and turbulence generated at the trailing edge. This noise reducing profile does not reduce the strain forces generated in the wind turbine blade, thus there is a risk that the laminate will buckle or crack as the blade bends in an edgewise direction.

WO 2010/043645 A2 discloses a wind turbine blade having multiple actively controlled flaps arranged at the trailing edge at regular intervals, wherein an elastic material may be arranged between adjacent flaps. As mentioned above, such flaps add to the complexity and costs of the blade.

US 2010/028161 A1 discloses a wind turbine according to the preamble of claim 1.

### Object of the Invention

It is an object of the invention to provide a wind turbine blade that improves the above-mentioned drawbacks of the prior art.

An object of this invention is to provide a wind turbine blade that reduces the strain forces generated in the trailing edge.

An object of this invention is to provide a wind turbine blade that saves material and reduces the production costs.

### Description of the Invention

An object of the invention is achieved by a wind turbine characterised in that:
- at least the first elements are shaped as projections which extend outwards from one of the two surfaces and are configured to deform in an edgewise direction, wherein the first element and the second element define a length and a height of each section.

This provides a wind turbine blade where the increase in the strain forces experienced by the aerodynamic profile is reduced by the deformation of the projecting first elements. The projecting elements are configured to deform from their initial shape as the wind turbine blade bends in at least an edgewise direction and return to their initial shape as the wind turbine blade returns to its initial profile. The projecting elements are configured to function as a bellow allowing the strain forces generated in the aerodynamic profile to be absorbed or at least reduced by the deformation of these elements. The projecting elements form a continuous out-of-plane profile at the trailing edge which is configured to at least deform in an in-plane direction as the wind turbine blade bends in an edgewise direction. This reduces the risk of laminate buckling or cracking as the wind turbine blade bends due to the incoming wind.

This configuration is well-suited for a pitchable wind turbine blade having a continuous blade section and/or a partial-pitch wind turbine blade having an inner blade section coupled to an outer blade section via a pitch joint. The wind turbine blade may have a length of 40 metres or more.

The continuous profile is defined by a plurality of first elements and a plurality of second elements, e.g. projecting elements, which are arranged in a successive order. The first and second elements may define a number of sections, e.g. waves, along the length of the blade. The height of each section may be defined as the height from a peak or planar surface of the first element to a peak or a planar surface of the second element. The length of each section may be defined by the length of the first element and the length of the second element. This allows for a continuously reduction of the strain forces generated in the aerodynamic profile and a reduction of the mean strain force experienced by the deflected wind turbine blade. This further reduces the thickness of the first and second elements and thereby saving material.

According to a specific embodiment, the second elements are further shaped as projections which extend outwards from one of the two surfaces and are configured to deform in an edgewise direction, wherein one of the two elements extends towards the pressure side and the other element extends towards the suction side respectively.

The first element may be configured to form a projection extending outwards toward the pressure side and second element may be configured to form a projection extending outwards towards the suction side. The first and second elements may be configured to form a corrugated trailing edge having a predetermined amplitude, i.e. height, and frequency, i.e. length. The corrugated edge may be a sinus-shaped edge, a serrated or sawtooth edge, a trapezoid edge or a stepped edge. The second element may be inverted so that it extends outwards from the same side as the first element, or vice versa. This allows the projecting elements to extend towards only one side. This provides a more flexible trailing edge which allows the strain force to be reduced over the entire trailing edge. This also reduces the relative deformation of each element in the profile, and such the strain forces.

The two elements may be symmetrically shaped, asymmetrically shaped, or a combination thereof. One or more of the second elements may have a shape that differs from one or more of the first elements. The amplitude and/or the frequency of the second element may differ from, e.g. be greater than, the amplitude and/or frequency of the first element. The second element may have a different shape, e.g. form a planar element, than the shape of the first element. This allows the configuration of the continuous profile and thus the first and second elements to be optimised.

According to one embodiment, the height of at least the first or second elements tapers off from the trailing edge towards the leading edge and/or from a first position towards a second position in an edgewise direction.

The height of the first and/or second elements may be tapered off in one or two directions. The height may be tapered from the trailing edge towards the leading edge. This allows the size and shape of the elements to be optimised in at least a chordwise direction, as the strain forces increases from the point of the maximum thickness towards the trailing edge due to the edgewise bending of the wind turbine blade. The height may further be tapered off from the first position, e.g. the blade root, towards the second position, e.g. the tip end. Two or more of the first and/or second elements may have the same height at the trailing edge where the height of the other first and/or second elements may be tapered off towards the second position. The height may be tapered off from an intermediate position towards both the first and second positions. This allows the size and shape of the elements to be further optimised in the edgewise direction.

In one embodiment, one or more of the first and/or second elements may be placed in an angled position relative to the chordwise direction or the frequency, i.e. length, of these elements may be tapered off from the trailing edge towards the leading edge. This also allows the configuration of the first and second elements to be optimised relative to the aerodynamic profile and size of the wind turbine blade.

According to one embodiment, the ratio between the height and length of the section is at least 1:1.

The configuration of the continuous profile and thus the first and second elements may be determined according to the ratio between the height and length of each section. Alternatively, the ratio between a first section and the ratio of a second section may differ. The ratio may be at least 1:1, e.g. 1:2, 1:5, 1:10 or any value there in between. The ratio may be at least 1:1, e.g. 2:1, 5:1, 10:1 or any value there in between. The ratio may also be determined according to the desired number of sections, the relative length of the continuous profile, and/or the length of the wind turbine blade. The ratio may vary along the length of the continuous profile, i.e. one predetermined area has a ratio that differs from the ratio of at least a second predetermined area. The peak-to-surface amplitude or peak-to-peak amplitude of the first and/or second elements may be between 2 to 15 centimetres.

According to one embodiment, the continuous profile extends from a first position, e.g. a blade root or inner blade end, towards a second position, e.g. a tip end or outer blade end.

The continuous profile may extend from a first position, e.g. the blade root or an inner blade end, to a second position located at a predetermined distance from the first position. The first and second elements may be arranged towards the blade root, e.g. in the area which defines the maximum chord length of the wind turbine blade. The second position may be located at a relative length of 0.2 to 0.4 from the blade root or the inner blade end. The second position may alternatively be the tip end or an outer blade end. This allows the continuous profile to enhance the aerodynamic performance of the wind turbine blade and allows for a larger maximum chord length without increasing the risk of laminate buckling or cracking.

The continuous profile may be located at or near either the blade root of a pitchable wind turbine blade having a traditional aerodynamic profile, the blade root of an inner blade section of a partial-pitch wind turbine blade or the inner blade end of the partial-pitch wind turbine blade.

According to one embodiment, the wind turbine blade comprises a first shell part coupled to a second shell part where the continuous profile is coupled to or integrated into at least one of the shell parts.

The continuous profile formed by the first and second elements may be configured as a trailing edge extender which defines the outermost trailing edge of the wind turbine blade. The trailing edge extender may be coupled to a truncated trailing edge, e.g. a flat back panel, of a wind turbine blade either at the manufacturing site or the installation site. This allows the trailing edge extender to be arranged relative to the trailing edge of a main blade element and then coupled to the main blade element. The main blade element may have a circular or elliptical cross-sectional shape and the continuous profile may be coupled directly to the main blade element or a laminate enclosing the main blade element.

The continuous profile formed by the first and second elements may be integrated into the trailing edge of at least one of the shell parts. The first and second elements may be integrated into the upper shell part defining the suction side of the wind turbine blade and/or the lower shell part defining the pressure side. This allows the thickness of the first and second elements to be defined by the thickness of that shell part which reduces the thickness of the trailing edge. The thickness of the laminate may be the same along the width, i.e. chord length, of the continuous profile or be tapered towards the outermost trailing edge. The trailing edge of the other shell part may be coupled, i.e. adhered, to the inner surface of the extended shell part at a retracted position. This enables the thickness of the outermost trailing edge to be further reduced.

One or more supporting elements, e.g. a projecting element or shear web, may be arranged inside the two shell parts for adding strength to the wind turbine blade when assembled. The support element may be coupled to or integrated into an inner surface of the respective shell part or shell parts. The support element may comprise a gluing surface, e.g. located on a gluing flange, at one or both ends for adhering the support element to the shell parts. Alternatively, a support element may be arranged in each of the shell parts and their free ends may then be coupled together when the wind turbine blade is assembled.

According to one embodiment, a first continuous profile is arranged in the first shell part and a second continuous profile is arranged in the second shell part.

The first and second elements may be integrated into both the first and second shell parts so that they form a first continuous profile and a second continuous profile. The trailing edges of the two continuous profiles may be arranged so that they form the outermost trailing edge of the wind turbine blade. The trailing edges of the two continuous profiles may be arranged so that one of the profiles, e.g. the upper profile, forms the outermost trailing edge and the other profile, e.g. the lower profile, is placed at a retracted position relative to the outermost trailing edge. The first elements of the first profile may be aligned with the first elements of the second profile; the same applies for the second elements. The first and second elements of the second continuous profile may be orientated so that they extend in the same direction as the first and second elements of the first continuous profile. This allows them to form a relative tight fit between the two profiles.

One or more drain elements, such as a hose, a tube or a through hole, may be arranged between two opposite facing first or second elements of the two continuous profiles. This allows water and moisture collected inside the wind turbine blade to lead out and away from the wind turbine blade. This eliminates the need for additional drain elements or holes. One of the two opposite facing elements may have a different shape than the other element so that the opposite facing surfaces define the drain element or allows for easier positioning of the drain element.

According to one embodiment, the continuous profile comprises a laminate of at least two layers comprising a plurality of fibres, wherein the fibres in one of the layers are arranged in a first axial direction, e.g. +45 degrees, relative to the length of the continuous profile and the fibres in the other layer are arranged in a second axial direction, e.g. -45 degrees, relative to the length of the continuous profile.

The laminate of one or both continuous profiles may comprise at least two layers of a fibre reinforced material, such as fiberglass, where the fibres in these layers are orientated in different axial directions relative to the longitudinal direction of the continuous profile. The fibres in these two layers are preferably arranged in a biaxial pattern of ±45 degrees, e.g. in a woven or non-woven configuration. An additional third and/or fourth layer may be arranged relative to the first two layers and the edgewise direction of the continuous profile. The continuous profiles may be made of one or more ultraviolet mats or weaved mats which are cut into the desired shape. This allows the laminate to be stretched into the desired shape during the lay-up so that the layers follow the contours of the first and second elements and allows the elements deform without damaging the laminate. This allows the first and second elements to have a high tolerance relative to the strain forces generated in the wind turbine blade.

According to a specific embodiment, one of the two shell parts comprises a first contact surface located at the trailing edge for contacting a second contact surface of the other shell part, wherein at least one elastic element is arranged between the two contact surfaces for sealing off the contact surfaces.

The elastic element may be a sealing element, e.g. of rubber, silicone, elastomer or another suitable sealing element, and may be arranged between the two continuous profiles for providing a water and moisture tight seal. The two contact surfaces may function as gluing surfaces for adhering or bonding the two continuous profiles together by using an adhesive. An adhesive, such as polyester, epoxy, vinyl ester and urethane, may be used to adhere the two surfaces together so that they form a strong bond or glue line. The elastic element may be selected so that it is able to follow the deformation of the continuous profiles without cracking or debonding. The elasticity of the elastic element may be defined by the elastic modulus (E-modulus) of the element, e.g. having a E-modulus value of no more than 2 GPa, e.g. between 1 to 2 GPa. The thickness of the elastic element may be between 2 to 7 millimetres.

The two shell parts of the wind turbine is normally glued together by using a tough and relative stiff resin, such as polyester, epoxy or vinyl ester, having an elasticity (E-modulus value) of 2.75 GPa or higher. If the two continuous profiles are adhered together by using this type of resin, then the glue line could debond or crack when the strain forces deform the continuous profiles.

### Description of the Drawing

The invention is described by example only and with reference to the drawings, wherein:
- Fig. 1: shows an exemplary embodiment of a pitchable wind turbine according to the invention,
- Fig. 2: shows an exemplary embodiment of a partial-pitch wind turbine according to the invention,
- Fig. 3: shows an exemplary embodiment of a wind turbine blade according to the invention,
- Fig. 4: shows a cut-out of the wind turbine blade of fig. 3,
- Fig. 5: shows an enlarged section of the continuous profile of fig. 4,
- Fig. 6: shows the continuous profile of fig. 4 seen from the trailing edge.

In the following text, the figures will be described one by one and the different parts and positions seen in the figures will be numbered with the same numbers in the different figures. Not all parts and positions indicated in a specific figure will necessarily be discussed together with that figure.

### Detailed Description of the Invention

| | | | |
|---|---|---|---|
| 1 | Pitchable wind turbine | 19 | Second shell part |
| 2 | Ground level | 20 | Support element |
| 3 | Foundation | 21 | Inner surface |
| 4 | Wind turbine tower | 22 | First space |
| 5 | Nacelle | 23 | Second space |
| 6 | Rotor hub | 24 | First continuous profile |
| 7 | Wind turbine blades | 25 | Second continuous profile |
| 8 | Tip end | 26 | First elements |
| 9 | Blade root | 27 | Second elements |
| 10 | Partial-pitch wind turbine | 28 | First position |
| 11 | Wind turbine blades | 29 | Second position |
| 12 | Inner blade section | 30 | Enlarged section |
| 13 | Outer blade section | 31 | Sections |
| 14 | Leading edge | 32 | Elastic element |
| 15 | Trailing edge | 33 | Compression |
| 16 | Pressure side | H | Amplitude |
| 17 | Suction side | L | Length |
| 18 | First shell part | | |

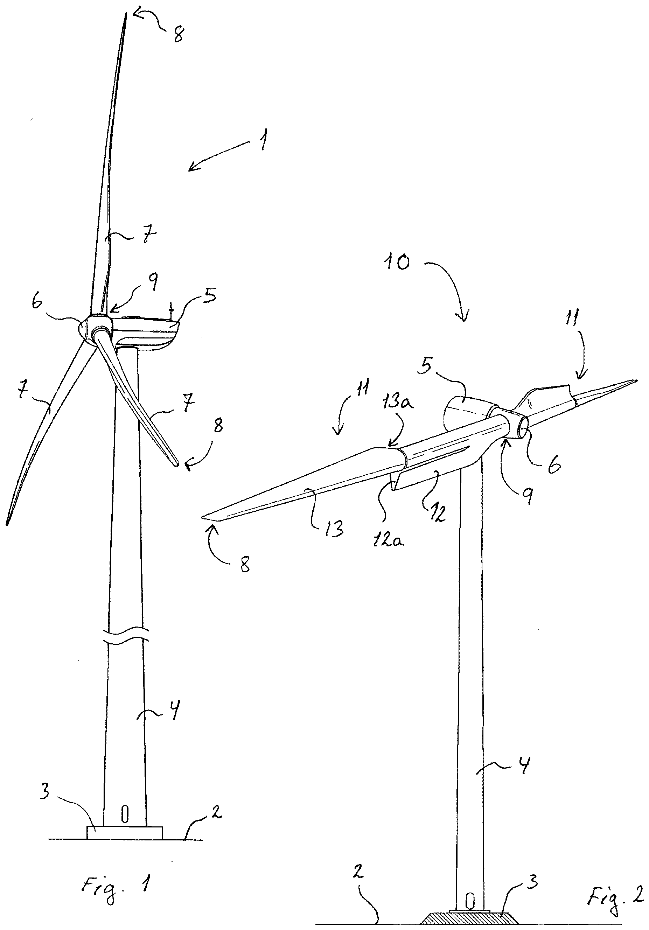

Fig. 1 shows an exemplary embodiment of a pitchable wind turbine 1 according to the invention. The wind turbine 1 is arranged relative to a ground level 2 or even a sea level and comprises a foundation 3 configured to be mounted to a bottom of a wind turbine tower 4. The wind turbine tower 4 may comprise two, three or more tower sections (not shown) that are mounted together to form the wind turbine tower 4. A nacelle 5 is arranged at top of the wind turbine tower 4 and rotatable coupled to the wind turbine tower 4, e.g. via a yaw system (not shown). A rotor having a rotor hub 6 is rotatable coupled to the nacelle, e.g. a generator inside the nacelle 5. Two or more wind turbine blades 7, here three is shown, in the form of pitchable wind turbine blades are mounted to the rotor hub 6, e.g. via one or more pitch systems (not shown). The wind turbine blades 7 extend outwards from the centre of the rotor hub 7 to form a plane of rotation and comprise a tip end 8 and a blade root 9.

Fig. 2 shows an exemplary embodiment of a partial-pitch wind turbine 10 according to the invention. In this configuration, the wind turbine blades 11 are configured as partial-pitch blades having at least an inner blade section 12 and an outer blade section 13. The outer blade section 13 is coupled to the inner blade section 12 via another pitch system (not shown) located at a pitch junction 14. The pitch system is configured to pitch the outer blade section 13 relative to the inner blade section 12. The inner blade section 12 has a first blade end 12a, i.e. an outer blade end, facing the tip end 8. The outer blade section 13 has a second blade end 13a, i.e. an inner blade end, facing the blade root 9. The blade sections 12, 13 may have the same aerodynamic profile or different aerodynamic profiles, e.g. a stall-controlled inner blade section 12 and a pitch-controlled outer blade section 13.

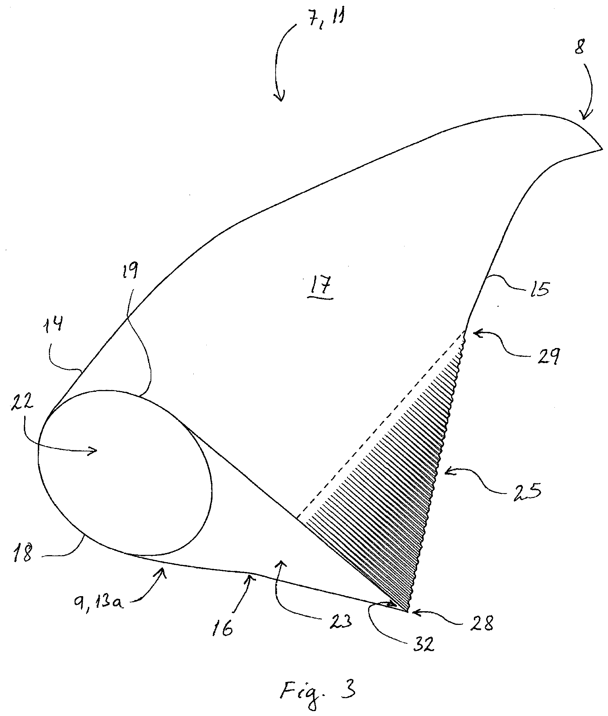

Fig. 3 shows an exemplary embodiment of a wind turbine blade according to the invention. The wind turbine blade is here shown as a pitchable wind turbine blade 7, but it can also be a partial-pitch wind turbine blade 11, such as an inner blade section 12 or an outer blade section 13.

The wind turbine blade 7, 11 has an aerodynamic profile defined by a plurality of cross-sectional profiles (not shown). The wind turbine blade 7, 11 has a leading edge 14 connected to a trailing edge 15 via a first outer surface 16 and a second outer surface 17. The first surface 16 defines the pressure side of the wind turbine blade 7, 11. The second surface 17 defines the suction side of the wind turbine blade 7, 11.

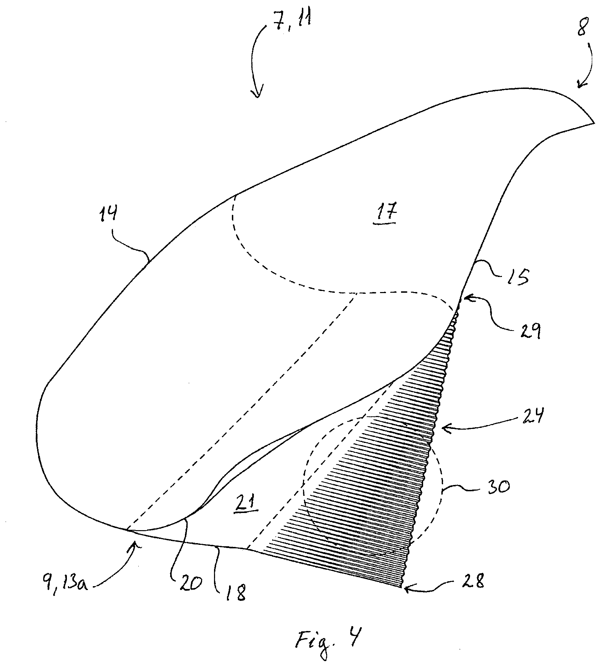

The wind turbine blade 7, 11 comprises a first shell part 18 and a second shell part 19 which each comprises at least two gluing surfaces (not shown) for gluing the two shell parts 18, 19 together. The gluing surfaces are arranged at the leading edge 14 and the trailing edge 15 respectively. A supporting element 20 in the form of a projecting element is arranged in each of the two shell part 18, 19 and faces the opposite shell part 18, 19, as shown in figs. 3 and 4. The support element 20 is coupled to, e.g. integrated into, an inner surface 21 of the shell part 18, 19. The wind turbine blade 7, 11 comprises a first enclosed space 22 and a second enclosed space 23 separated from each other by the support elements 20, as shown in fig. 3. The free ends of the support elements 20 each comprises a third gluing surface (not shown) for gluing the two shell parts 18, 19 together. The support elements 20 are configured to add strength to the wind turbine blade 7, 11 when assembled.

A first continuous profile 24 is arranged at the pressure side 16 of the first shell part 18 and a second continuous profile 25 is arranged at the suction side 17 of the second shell part 19. The continuous profiles 24, 25 are located at the trailing edge 15 of the wind turbine blade 7, 11, as shown in figs. 3 and 4. The continuous profile 24, 25 is defined by a plurality of first elements 26 and second elements 27 arranged in a successive order and extends along the trailing edge 15. Each of the first and second elements 26, 27 extend in a chordwise direction from the trailing edge 15 towards the leading edge 14.

Fig. 4 shows a cut-out of the wind turbine blade 7, 11 of fig. 3 where an inner portion of the first shell part 18 is omitted. The continuous profile 24, 25 is coupled to, e.g. integrated into, the shell part 18, 19, as shown in fig. 4.The continuous profile 24, 25 extends from a first position 28, e.g. the blade root 9 or the blade end 13a, facing the rotor hub 6 towards a second position 29 facing the tip end 8. The first and second elements 26, 27 are configured as projections extending outwards from the plane of the continuous profile 24, 25.

The first and second elements 26, 27 of the first continuous profile 24 are aligned with the first and second elements 26, 27 of the second continuous profile 25. The first and second elements 26, 27 are further oriented in the same directions, i.e. the first elements 26 extend towards the pressure side 16 while the second elements 27 extend towards the suction side 17. The first elements 26 of the first continuous profile 24 extend outwards from the outer surface 16, i.e. the pressure side, and the second elements 27 extend outwards from the inner surface 21. The first elements 26 of the second continuous profile 25 extend outwards from the inner surface 21 and the second elements 27 extend outwards from the outer surface 17, i.e. the suction side.

The length of the first and second elements 26, 27 and thus the continuous profile 24, 25 tapers off, i.e. in a chordwise direction, from the first position 28 towards the second position 29, as shown in figs. 3 and 4.

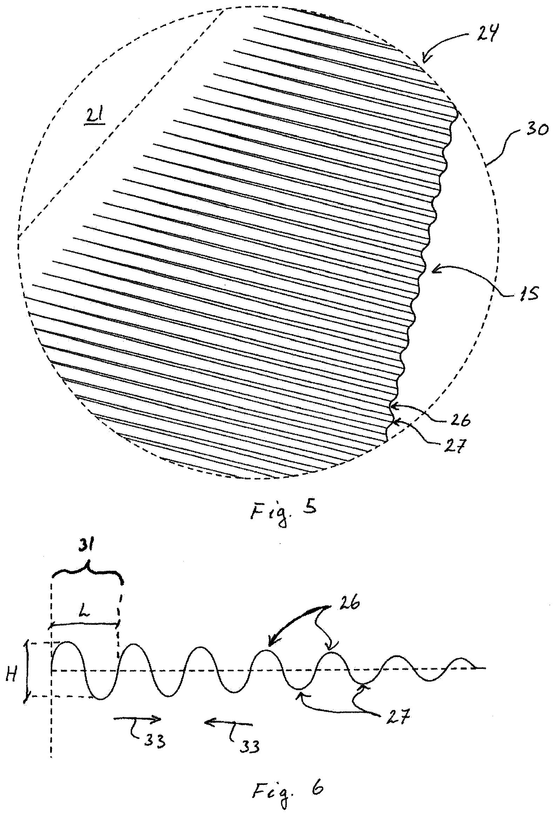

Fig. 5 shows an enlarged section 30 of the continuous profile 24, 25 of fig. 4 where the first and second elements 26, 27 form a corrugated profile at the trailing edge 15. The first element 26 and the second element 27 form a number of sections 31 along the trailing edge 15. Each section 31 has a predetermined amplitude, i.e. height H, and frequency, i.e. length L. The amplitude H is measured from the peak of the first element 26 to the peak of the second element 27. The length L is measured between the peaks of two adjacent first elements. The trailing edge 15 forms a sinus-shaped edge where the first and second elements 26, 27 form a first and second wave half respectively. The amplitude H tapers off from the trailing edge 15 in a chordwise direction towards the leading edge 14.

The first and second elements 26, 27 are shaped to form a tight fit at or near the trailing edge 15 between the two continuous profiles 24, 25 of the shell parts 18, 19. The first continuous profile 24 comprises a first contact surface (not shown), e.g. arranged on the inner surface 21, extending in the edgewise length of the wind turbine blade 7, 11. The second continuous profile 25 comprises a second contact surface (not shown), e.g. arranged on the inner surface 21, extending in the edgewise length of the wind turbine blade 7, 11. The two contact surfaces are configured to be brought into contact with each other when the wind turbine 7, 11 is assembled.

At least one elastic element 32 in the form of a sealing element or adhesive is arranged between the two contact surfaces for sealing off the contact surfaces. The elastic element 32 is selected so that it has an elasticity (E-modulus value) of no more than 2 GPa. The elastic element 32 has a thickness of no more than 7 millimetres. This enables the elastic element 32 to follow the deformation of the continuous profiles 24, 25 when the strain forces increases and decreases.

The laminate of the two continuous profiles 24, 25 comprises at least two layers of a fibre reinforced material. The fibres in one layer are arranged in a first axial direction, e.g. +45 degrees, while the fibres in the other layer are arranged in a second axial direction, e.g. -45 degrees, relative to the edgewise length of the continuous profile 24, 25. The continuous profile 24, 25 is configured as a mat, e.g. an ultraviolet mat, a woven mat or a non-woven mat. The elastic element 32 is arranged so that it follows the orientation of the fibres located in the laminate of the continuous profiles 24, 25.

Fig. 6 shows the continuous profile 24, 25 of fig. 4 seen from the trailing edge 15. The amplitude H tapers off, i.e. in an edgewise direction, from the first position 28 towards the second position 29. The continuous profile 24, 25 has a constant length L along the trailing edge 15.

The shape of the continuous profile 24, 25 and thus the first and second elements 26, 27 is determined according to the ratio between the amplitude H and the length L of each section 31. The ratio between the amplitude H and length L of the section 31 is at least 1:1 measured at the first position 28. The amplitude H of the continuous profile 24, 25 is at least 2 centimetres.

The first and second elements 26, 27 form a continuous out-of-plane profile which is configured to be compressed (marked with arrows 33) in an in-plane direction as the wind turbine blade 7, 11 bends in an edgewise direction. The first and second elements 26, 27 are configured to deform from their initial shape when the strain force in the aerodynamic profile increases, and return to their initial shape when the strain force decreases. This allowing the strain force to be reduced over the entire trailing edge 15.

## Claims

1. A wind turbine (1, 10) comprising:
- a wind turbine tower (4) having a top,
- a nacelle (5) coupled to the top of the wind turbine tower (4),
- a rotor hub (6) rotatably mounted to the nacelle (5),
- at least one wind turbine blade (7, 11) coupled to the rotor hub (6), where the wind turbine blade (7, 11) has an aerodynamic profile comprising a first surface (16) defining a pressure side and a second surface (17) defining a suction side connected to each other via a leading edge (14) and a trailing edge (15), where
- two or more first elements (26) are arranged along at least a part of the trailing edge (15) of the wind turbine blade (7, 11) and at least a second element (27) is arranged between two adjacent first elements, wherein the first and second elements (26, 27) form a continuous profile (24, 25) extending along the trailing edge (15) where each element extends in a chordwise direction towards the leading edge (14), wherein each first element (26) and each adjacent second element (27) define a section of the continuous profile (24, 25)
**characterised in that,**
- at least the first elements (26) are shaped as projections which extend outwards from one of the two surfaces (16, 17) and are configured to deform (33) in a edgewise direction, wherein the first element (26) and the second element (27) define a length (L) and a height (H) of each section.

2. A wind turbine according to claim 1, **characterised in that** the second elements (26, 27) are further shaped as projections which extend outwards from one of the two surfaces (16, 17) and are configured to deform (33) in an edgewise direction, wherein one (26) of the two elements extends towards the pressure side (16) and the other element (27) extends towards the suction side (17) respectively.

3. A wind turbine according to claims 1 or 2, **characterised in that** the height (H) of at least the first or second elements (26) tapers off from the trailing edge (15) towards the leading edge (14).

4. A wind turbine according to any one of claims 1 to 3, **characterised in that** the height (H) of at least the first or second elements (26) taper off from a first position (28) towards a second position (29) in a edgewise direction.

5. A wind turbine according to any one of claims 1 to 4, **characterised in that** the ratio between the height (H) and length (L) of the section is at least 1:1.

6. A wind turbine according to any one of claims 1 to 5, **characterised in that** the continuous profile (24, 25) extends from a first position (28) towards a second position (29).

7. A wind turbine according to claim 6, wherein the first position is a blade root or an inner blade end.

8. A wind turbine according to claim 6 or 7, wherein the second position is a tip end or an outer blade end.

9. A wind turbine according to any one of claims 1 to 8, **characterised in that** the wind turbine blade (7, 11) comprises a first shell part (18) coupled to a second shell part (19) where the continuous profile (24, 25) is coupled to or integrated into at least one of the shell parts (18, 19).

10. A wind turbine according to claim 9, **characterised in that** a first continuous profile (24) is arranged in the first shell part (18) and a second continuous profile (25) is arranged in the second shell part (19).

11. A wind turbine according to any one of claims 1 to 10, **characterised in that** the continuous profile (24, 25) comprises a laminate of at least two layers comprising a plurality of fibres, wherein the fibres in one of the layers are arranged in a first axial direction relative to the length of the continuous profile (24, 25) and the fibres in the other layer are arranged in a second axial direction relative to the length of the continuous profile (24, 25).

12. A wind turbine according to claim 11, wherein the first axial direction is +45 degrees.

13. A wind turbine according to claim 11 or 12, wherein the second axial direction is - 45 degrees.

14. A wind turbine according to any one of claims 9 to 13, **characterised in that** one (18) of the two shell parts comprises a first contact surface located at the trailing edge (15) for contacting a second contact surface of the other shell part (19), wherein at least one elastic element (32) is arranged between the two contact surfaces for sealing off the contact surfaces.

## Patentansprüche

1. Windturbine (1, 10) umfassend:
- ein Windturbinenturm (4) mit einer Spitze,
- eine Gondel (5), die mit der Oberseite des Windturbinenturms (4) verbunden ist,
- eine Rotornabe (6), die drehbar an der Gondel (5) angebracht ist,
- mindestens eine mit der Rotornabe (6) gekoppelte Windturbinenschaufel (7, 11), wobei die Windturbinenschaufel (7, 11) ein aerodynamisches Profil mit einer ersten Oberfläche (16), die eine Druckseite definiert, und einer zweiten Oberfläche (17), die eine Saugseite definiert, welche über eine Vorderkante (14) und einer Hinterkante (15) miteinander verbunden sind, wobei
- zwei oder mehr erste Elemente (26), die entlang mindestens eines Teils der Hinterkante (15) der Windturbinenschaufel (7, 11) angeordnet sind, und mindestens ein zweites Element (27), das zwischen zwei benachbarten ersten Elementen angeordnet ist, wobei die ersten und zweiten Elemente (26, 27) ein kontinuierliches Profil (24, 25) bilden, das sich an der Hinterkante (15) entlang erstreckt, wobei jedes Element sich in einer chordenmäßigen Richtung zur Vorderkante (14) hin erstreckt, wobei jedes erste Element (26) und jedes angrenzende zweite Element (27) einen Abschnitt des kontinuierlichen Profils (24, 25) definieren
**dadurch gekennzeichnet, dass**
wenigstens die ersten Elemente (26) als Vorsprünge ausgebildet sind, die sich von einer der beiden Oberflächen (16, 17) nach außen hin erstrecken und so ausgebildet sind, dass sie sich in einer kantenmäßigen Richtung verformen (33), wobei das erste Element (26) und das zweite Element (27) eine Länge (L) und eine Höhe (H) jedes Abschnitts definiert.

2. Windturbine nach Anspruch 1, **dadurch gekennzeichnet, dass** die zweiten Elemente (26, 27) ferner als Vorsprünge ausgebildet sind, die sich von einer der beiden Oberflächen (16, 17) nach außen hin erstrecken und so konfiguriert sind, dass sie sich in einer kantenmäßigen Richtung verformen (33), wobei sich eines (26) der beiden Elemente zur Druckseite (16) hin und das andere Element (27) zur Saugseite (17) hin erstreckt.

3. Windturbine nach Anspruch 1 oder 2, **dadurch gekennzeichnet, dass** sich die Höhe (H) zumindest des ersten oder zweiten Elements (26) von der Hinterkante (15) zur Vorderkante (14) hin verjüngt.

4. Windturbine nach einem der Ansprüche 1 bis 3, **dadurch gekennzeichnet, dass** die Höhe (H) zumindest des ersten oder zweiten Elements (26) von einer ersten Position (28) zu einer zweiten Position (29) in einer kantenmäßigen Richtung abnimmt.

5. Windturbine nach einem der Ansprüche 1 bis 4, **dadurch gekennzeichnet, dass** das Verhältnis zwischen der Höhe (H) und der Länge (L) des Abschnitts mindestens 1:1 beträgt.

6. Windturbine nach einem der Ansprüche 1 bis 5, **dadurch gekennzeichnet, dass** das kontinuierliche Profil (24, 25) sich von einer ersten Position (28) zu einer zweiten Position (29) erstreckt.

7. Windturbine nach Anspruch 6, wobei die erste Position eine Schaufelwurzel oder ein inneres Schaufelende ist.

8. Windturbine nach Anspruch 6 oder 7, wobei die zweite Position ein Spitzenende oder ein äußeres Schaufelende ist.

9. Windturbine nach einem der Ansprüche 1 bis 8, **dadurch gekennzeichnet, dass** die Windturbinenschaufel (7, 11) ein erstes Schalenteil (18) aufweist, das mit einem zweiten Schalenteil (19) gekoppelt ist, wobei das kontinuierliche Profil (24 25) mit mindestens einem der Schalenteile (18, 19) gekoppelt oder in diesen integriert ist.

10. Windturbine nach Anspruch 9, **dadurch gekennzeichnet, dass** ein erstes kontinuierliches Profil (24) in dem ersten Schalenteil (18) angeordnet ist und ein zweites kontinuierliches Profil (25) in dem zweiten Schalenteil (19) angeordnet ist.

11. Windturbine nach einem der Ansprüche 1 bis 10, **dadurch gekennzeichnet, dass** das kontinuierliche Profil (24, 25) ein Laminat aus mindestens zwei Lagen mit mehreren Fasern umfasst, wobei die Fasern in einer der Lagen angeordnet sind in einer ersten axialen Richtung relativ zur der Länge des kontinuierlichen Profils (24, 25) und wobei die Fasern in der anderen Schicht angeordnet sind in einer zweiten axialen Richtung in Bezug auf die Länge des kontinuierlichen Profils (24, 25).

12. Windturbine nach Anspruch 11, wobei die erste axiale Richtung +45 Grad beträgt.

13. Windturbine nach Anspruch 11 oder 12, wobei die zweite axiale Richtung -45 Grad beträgt.

14. Windturbine nach einem der Ansprüche 9 bis 13, **dadurch gekennzeichnet, dass** eines (18) der beiden Schalenteile eine an der Hinterkante (15) befindliche erste Kontaktfläche zum Kontaktieren einer zweiten Kontaktfläche des anderen Schalenteils (19) aufweist, wobei zwischen den beiden Kontaktflächen mindestens ein elastisches Element (32) zum Abdichten der Kontaktflächen angebracht ist.

## Revendications

1. Éolienne (1, 10) comprenant:
- une tour éolienne (4) ayant une partie supérieure,
- une nacelle (5) réalisée au sommet de la tour éolienne (4),
- un moyeu de rotor (6) monté de manière rotative à la nacelle (5),
- au moins une pale d'éolienne (7, 11) couplée au moyeu de rotor (6), la pale d'éolienne (7, 11) ayant un profil aérodynamique qui comprend une première surface (16) définissant un intrados et une seconde surface (17) définissant un extrados reliés entre eux par un bord d'attaque (14) et un bord de fuite (15), où
- deux ou plusieurs premiers éléments (26) sont disposés le long d'au moins une partie du bord de fuite (15) de la pale d'éolienne (7, 11) et au moins un second élément (27) est disposé entre deux premiers éléments adjacents, les premier et second éléments (26, 27) formant un profil continu (24, 25) qui s'étend le long du bord de fuite (15) où chaque élément s'étend dans le sens de la corde vers le bord d'attaque (14), dans lequel chaque premier élément (26) et chaque second élément adjacent (27) définissent une section du profil continu (24, 25),
**caractérisée en ce que**
- au moins les premiers éléments (26) sont en forme de saillies qui s'étendent vers l'extérieur depuis l'une des deux surfaces (16, 17) et qui sont configurés pour se déformer (33) dans une direction vers le côté, dans lequel le premier élément (26) et le second élément (27) définissent une longueur (L) et une hauteur (H) de chaque section.

2. Éolienne selon la revendication 1, **caractérisée en ce que** les seconds éléments (26, 27) sont en forme de saillies qui s'étendent vers l'extérieur depuis l'une des deux surfaces (16, 17) et qui sont configurés pour se déformer (33) dans une direction vers le côté, dans lequel l'un (26) des deux éléments s'étend vers l'intrados (16) et l'autre élément (27) s'étend vers l'extrados (17) respectivement.

3. Éolienne selon les revendications 1 ou 2, **caractérisée en ce que** la hauteur (H) d'au moins le premier ou le deuxième élément (26) se rétrécit à partir du bord de fuite (15) vers le bord d'attaque (14).

4. Éolienne selon l'une quelconque des revendications 1 à 3, **caractérisée en ce que** la hauteur (H) d'au moins le premier ou le second élément (26) se rétrécit à partir d'une première position (28) vers une seconde position (29) dans une direction vers le côté.

5. Éolienne selon l'une quelconque des revendications 1 à 4, **caractérisée en ce que** le rapport entre la hauteur (H) et la longueur (L) de la section est au moins de 1:1.

6. Éolienne selon l'une quelconque des revendications 1 à 5, **caractérisée en ce que** le profil continu (24, 25) s'étend à partir d'une première position (28) vers une seconde position (29).

7. Éolienne selon la revendication 6, dans laquelle la première position constitue un pied de pale ou une extrémité intérieure de pale.

8. Éolienne selon la revendication 6 ou 7, dans laquelle la seconde position constitue une extrémité en pointe ou une extrémité extérieure de pale.

9. Éolienne selon l'une quelconque des revendications 1 à 8, **caractérisée en ce que** la pale d'éolienne (7, 11) comprend une première partie de coque (18) couplée à une deuxième partie de coque (19), où le profil continu (24, 25) est couplé ou intégré à au moins une des parties de coque (18, 19).

10. Éolienne selon la revendication 9, **caractérisée en ce qu'un** premier profil continu (24) est aménagé dans la première partie de coque (18) et un deuxième profil continu (25) est aménagé dans la deuxième partie de coque (19).

11. Éolienne selon l'une des revendications 1 à 10, **caractérisée en ce que** le profil continu (24, 25) comprend un stratifié avec au moins deux couches comprenant une pluralité de fibres, dans laquelle les fibres dans l'une des couches sont disposées dans une première direction axiale par rapport à la longueur du profil continu (24, 25) et les fibres dans l'autre couche sont disposées dans une deuxième direction axiale par rapport à la longueur du profil continu (24, 25).

12. Éolienne selon la revendication 11, dans laquelle la première direction axiale est de +45 degrés.

13. Éolienne selon la revendication 11 ou 12, dans laquelle la deuxième direction axiale est de -45 degrés.

14. Éolienne selon l'une quelconque des revendications 9 à 13, **caractérisée en ce que** l'une (18) des deux parties de coque comprend une première surface de contact située au bord de fuite (15) pour contacter une deuxième surface de contact de l'autre partie de coque (19), dans laquelle au moins un élément élastique (32) est aménagé entre deux surfaces de contact pour étancher les surfaces de contact.
